(19) Europäisches Patentamt
European Patent Office
Office européen des brevets

(11) Veröffentlichungsnummer: **0 326 888 A1**

# (12) EUROPÄISCHE PATENTANMELDUNG

(21) Anmeldenummer: 89101080.3

(22) Anmeldetag: 23.01.89

(51) Int. Cl.4: C08L 81/02 , C08K 3/08 , C08K 3/22 , C08K 3/30 , C08K 5/07

(30) Priorität: 05.02.88 DE 3803479
16.08.88 DE 3827645
17.12.88 DE 3842623
21.12.88 DE 3842946

(43) Veröffentlichungstag der Anmeldung: 09.08.89 Patentblatt 89/32

(84) Benannte Vertragsstaaten: BE DE FR GB IT

(71) Anmelder: BAYER AG
D-5090 Leverkusen 1 Bayerwerk(DE)

(72) Erfinder: Stahlke, Kurt-Rainer, Dr.
Amselweg 20
D-5067 Kürten 2(DE)
Erfinder: Wehnert, Wolfgang, Dr.
Bodelschwinghstrasse 14
D-4150 Krefeld(DE)
Erfinder: Kraft, Klaus, Dr.
Doerperhofstrasse 15
D-4150 Krefeld(DE)
Erfinder: Köhler, Burkhard, Dr.
Virneburgstrasse 9
D-4150 Krefeld 11(DE)
Erfinder: Korte, Siegfried, Dr.
Engstenberger Höhe 3
D-5068 Odenthal(DE)
Erfinder: Meyer, Rolf-Volker, Dr.
Buchheimer Strasse 23
D-4150 Krefeld(DE)
Erfinder: Zirngiebl, Eberhard, Dr.
Roggendorfstrasse 65
D-5000 Köln 80(DE)
Erfinder: Löhr, Karl-Dieter, Dr.
Zum Wald 25
D-4234 Alpen(DE)
Erfinder: Reinking, Klaus, Dr.
Robert-Stolz-Strasse 16 B
D-5632 Wermelskirchen 1(DE)
Erfinder: Dziurla, Heinz-Jürgen, Dr.
Solinger Strasse 35
D-5090 Leverkusen 1(DE)

## (54) Polyarylensulfide mit verringerter Radikalbildung und ihre Verwendung zur Herstellung geformter Körper.

(57) Die Erfindung betrifft Mischungen aus Polyarylensulfiden (PAS), vorzugsweise Polyphenylensulfiden (PPS) und Metallen, Metallverbindungen und Übergangsmetallkomplexen und ihre Verwendung zur Herstellung geformter Körper. Die Mischungen zeigen eine verringerte Radikalbildung, z.B. unter Bestrahlung mit Tageslicht und UV-Licht unter atmosphärischen Bedingungen. Sie eignen sich bevorzugt zur Herstellung von Fasern.

EP 0 326 888 A1

Xerox Copy Centre

## Polyarylensulfide mit verringerter Radikalbildung und ihre Verwendung zur Herstellung geformter Körper

Die Erfindung betrifft Mischungen aus Polyarylensulfiden (PAS), vorzugsweise Polyphenylensulfiden (PPS) und Metallen, Metallverbindungen und Übergangsmetallkomplexen und ihre Verwendung zur Herstellung geformter Körper. Die Mischungen zeigen eine verringerte Radikalbildung, z.B. unter Bestrahlung mit Tageslicht und UV-Licht unter atmosphärischen Bedingungen. Sie eignen sich bevorzugt zur Herstellung von Fasern.

Polyarylensulfide und ihre Herstellung sind bekannt sowie ihre Abmischung z.B. mit anorganischen Füllstoffen wie Quarzmehl, Glasfasern usw. (z. B. US-A 3 354 129, EP-A 171 021). Polyarylensulfidharze sind in ihrer Wärmebeständigkeit, Lösungsmittelstabilität, Flammwidrigkeit und anderen Eigenschaften vielen Thermoplasten überlegen. Nachteilig kann jedoch ihre mangelnde Beständigkeit gegenüber UV-Strahlung, insbesondere in Gegenwart von Sauer stoff sein (Ultrakurzbewitterung). Daher sind Formteile, Folien und Fasern aus PPS z. B. für Einsatzzwecke unter atmosphärischen Bedingungen (UV-Strahlung, $O_2$) nur bedingt geeignet.

Zur Erzielung einer guten Wärmeleitfähigkeit und gegebenenfalls guter elektrischer Eigenschaften, z.B. Leitfähigkeit, elektromagnetischer Abschirmung usw. müssen Kunststoffe mit großen Mengen an Metallen und Metallverbindungen abgemischt werden.

Es ist bekannt, daß PAS, wie andere Kunststoffe auch, mit Ruß stabilisiert werden kann (z. B. JA-A 100 139). Die mechanischen und farblichen Eigenschaften dieser Mischungen werden durch die Rußmengen beeinflußt. Die Herstellung von Fasern aus rußhaltigem PPS ist schwierig. Weiterhin ist bekannt, PAS mit ZnO als Co-Stabilisator und z.B. $TiO_2$ als Pigment abzumischen.

Aus der DE-A 3 617 138 ist bekannt, PAS durch Zusatz von Kupfer-(I)-halogeniden zu stabilisieren. Nickelkomplexe mit schwefelhaltigen Liganden sind aus der US-A 4 130 081 als Stabilisatoren für PPS bekannt.

Weiterhin ist bekannt eine Stabilisierung des PPS durch Zusatz von z.B. Zinncarboxylaten und -oxiden (z.B. EP-A 94 038) sterisch gehinderten Phenolen (z.B. EP-A 94 092) und N-acylierten Aminotriazolen (z.B. EP-A 94 091) bei der Verarbeitung zu bewirken.

Diese Additive ermöglichen jedoch kaum Schutz gegen radikalische Schädigung, z. B. bei UV-Bestrahlung des Polymeren (z. B. Tageslicht).

Ein direktes Maß für Bindungsbrüche durch UV-Belastung ist die Messung der Radikalkonzentration unter Bestrahlung. Nach dieser Meßmethode wurde mit Tetramethylpiperidinen (z. B. US-PS 4 370 430) als PPS-Stabilisatoren keine Verringerung der Radikalbildungsgeschwindigkeit beobachtet.

Ein Abbau der Polymermoleküle im PPS kann z. B. durch Messung der Vergilbung verfolgt werden. Hierbei wird das Remissionsspektrum mit einer Kugelgeometrie (d/8, mit Glanz) im Wellenbereich zwischen 400 und 700 nm gemessen. Als integraler Wert für die Vergilbung der Probe wird der Yellowness-Index bestimmt.

Es wurde nun gefunden, daß Mischungen aus Polyarylensulfiden, vorzugsweise Polyphenylensulfiden, bestimmten Metallen, Metallverbindungen und (schwefelfreien) Übergangsmetallkomplexen und bestimmten schwefelhaltigen Substanzen oder solchen Metallen, die unter Belichtung Metallverbindungen, vorzugsweise Metallsulfide bilden, verbesserte Eigenschaften besonders gegenüber Oxidation unter Bestrahlung (z.B. Tageslicht) haben.

Gegenstand der Erfindung sind daher Mischungen aus

A) Polyarylensulfiden, vorzugsweise Polyphenylensulfid und

B) 0,1 bis 90, vorzugsweise 50 - 75 Gew.-% von Metallen und/oder Metallverbindungen und Übergangsmetallkomplexen und weiteren Substanzen, wobei $TiO_2$, ZnO, Cu(I)Cl ohne weitere Zusätze ausgenommen sind und gegebenenfalls

C) bezogen auf das Gewicht der Summe der Mischung aus A) + B) bis 400, vorzugsweise 0,01 bis 60, Gew.-% anderer Füllstoffe und Zusatzstoffe.

Erfindungsgemäß einsetzbare Polyarylensulfide sind bekannt (z.B. US-A 3 354 129, EP-A 171021) und handelsüblich.

Als Metalle können erfindungsgemäß verwendet werden die Metalle der 3. Hauptgruppe, z.B. Aluminium, der 4. Hauptgruppe, z.B. Germanium, Zinn, Blei, der ersten Nebengruppe, z.B. Kupfer, Silber, der zweiten Nebengruppe, z.B. Zink, der 4, Nebengruppe, z.B. Titan, Zirkon, der 6. Nebengruppe, z.B. Chrom, Molybdän, Wolfram und der achten Nebengruppe z.B. Eisen, Cobalt, Nickel des Periodensystems der Elemente nach Mendeljew (z.B. Hollemann-Wiberg Lehrbuch der anorganischen Chemie, Walter de Gruyter

+ Co., Berlin 1964, Anhang).

Erfindungsgemäß können auch Mischungen und Legierungen der Metalle eingesetzt werden und Mischungen von Metallen, Legierungen und Metallverbindungen.

Die Metalle können vorzugsweise in Mengen von 5 bis 90 Gew.-%, besonders bevorzugt 30 bis 75 Gew.-% als Pulver, Plättchen (ca. 5 bis 100 µm Durchmesser), als Fasern (ca. 4 bis 20 µm Durchmesser, 0,01 bis 20 mm lang), als End losfaser, die gegebenenfalls vor Einarbeitung zerkleinert wird, als Kugeln (ca. 20 bis 200 µm Durchmesser) eingesetzt werden.

In einer besonderen Ausführungsform können z.B. metallisierte Fasern, z.B. Aramid-, Kohlenstoff-, Glasfasern und -kugeln und -Gewebe eingesetzt werden.

Als Metallverbindungen können z. B. die Oxide, Sulfide, Titanate und Ferrite (z B. Bariumferrit) der genannten Metalle eingesetzt werden, z. B. Eisenoxide, Silberoxid, Bleioxid, Nickelsulfid, Chromoxide, Molybdänsulfide- und Oxide, Cobaltoxide, Aluminiumoxid, Eisensulfide usw.

Als Zusatzstoffe können erfindungsgemäß bis 400 Gew.-%, vorzugsweise bis 70 Gew.-%, besonders bevorzugt 0,01 bis 60 Gew.-% übliche Füllstoffe und Hilfsstoffe wie Stabilisatoren, Entformungsmittel und Pigmente wie Titandioxid, Zinkoxid, Fettsäureester, Metallstearate, Silikone, Glaspulver, Glaskugeln und Glasfasern, Graphit, Ruß, Kohlenstoffasern, Glimmer, Quarz, usw. zugesetzt werden.

Erfindungsgemäß können vorzugsweise 0,1 - 10 Gew.-% Übergangsmetallkomplexe, die als Metall Elemente der 1. bis 8. Nebengruppe und 4. Periode, bevorzugt der 7. oder 8. Nebengruppe und der 4. Periode des Periodensystems der Elemente enthalten und schwefelfreie Liganden enthalten, die über Sauerstoff-, Stickstoff-, Phosphor-oder hapto-5-artig über Kohlenstoffatome an das Metall gebunden sind und Chelatliganden zugesetzt werden.

Die Chelatliganden entsprechen vorzugsweise den Formeln (I) bis (XIII).

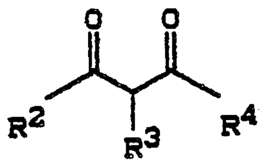

(I),

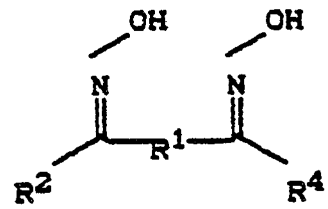

(II),

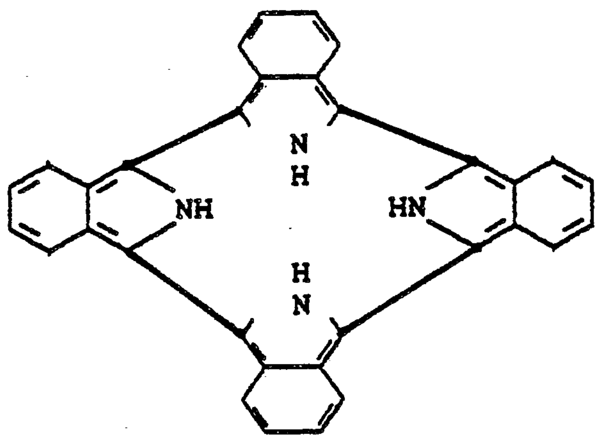

(III),

$HOOC-R^1-COOH$

(IV),

$R_2-COOH$

(V),

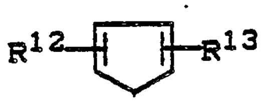

(VI),

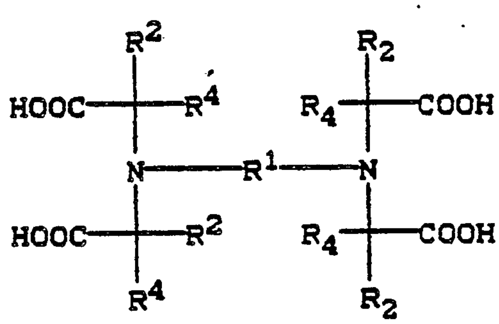

(VII),

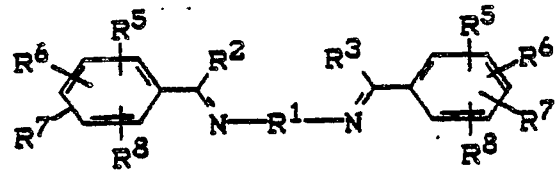

(VIII),

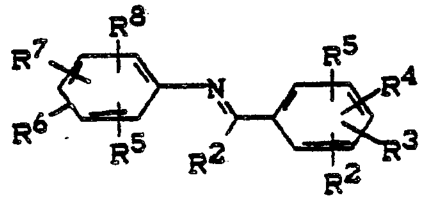

(IX),

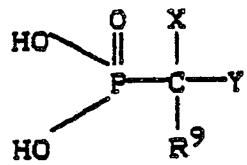

(X),

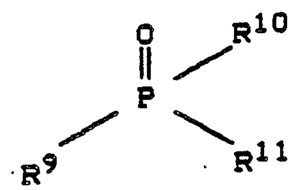

(XI),

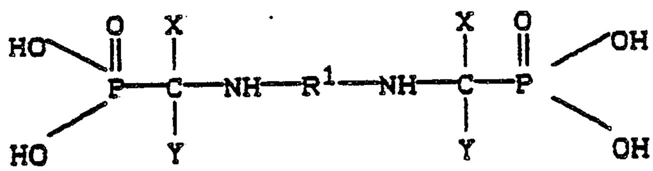

(XII),

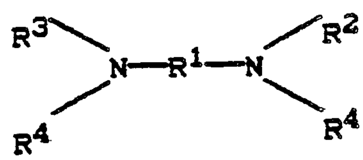

(XIII),

wobei

$R^1$ eine chemische Bindung, $C_{1-4}$-Alkyliden oder $C_2$-$C_4$-Alkenyliden, einen divalenten $C_{8-22}$-Araliphaten, vorzugsweise o-, p- oder m-Xylyliden, einen divalenten $C_{6-14}$-Aromaten, vorzugsweise o-Phenylen oder eines 5 - 14 Atome enthaltenden, divalenten P, N, O-haltigen Heteroaromaten bedeutet,

$R^2$ - $R^4$ Wasserstoff, $C_{1-22}$-Alkyl oder $C_2$-$C_{22}$-Alkenyl, vorzugsweise Methyl, $C_{5-12}$-Cycloalkyl, vorzugsweise Cyclohexyl, $C_{7-14}$-Aralkyl oder -Alkylaryl, $C_{6-14}$-Aryl, vorzugsweise Phenyl oder einen 5 - 14 Atome enthaltenden S, P, N oder O-haltigen Heteroarylrest und zwei der Reste $R^2$ bis $R^4$ Glieder eines bis zu 12 Atome zählenden Ringes sein können,

$R^5$ - $R^8$ Wasserstoff, eine Hydroxy- oder Aminogruppe, $C_{1-22}$-Alkyl, vorzugsweise Methyl, $C_{5-12}$-Cycloalkyl, vorzugsweise Cyclohexyl, $C_{7-12}$-Aralkyl oder Arylalkyl oder $C_{6-14}$-Aryl, vorzugsweise Phenyl bedeuten und zwei orthoständige Reste Glieder eines bis zu 6 Kohlenstoffatome zählenden Rings sein können,

$R^9$ Wasserstoff, $C_{1-22}$-Alkyl, $C_{5-12}$-Cycloalkyl, $C_{7-12}$-Aralkyl oder Arylalkyl, vorzugsweise Benzyl, $C_{6-14}$-Aryl, vorzugsweise Phenyl, wobei der Phenylrest Alkoxy-, Halogen-, Alkyl- oder arylsubstituiert sein kann,

oder $C_{1-4}$-Alkylen oder Alkenyliden, einen divalenten $C_{8-22}$-Araliphaten, vorzugsweise o-, p- oder m-Xylyliden oder einen divalenten $C_{6-14}$-Aromaten, vorzugsweise o-, m- oder p-Phenyliden bedeutet, wobei die freie Valenz durch einen phosphorhaltigen Rest, der den Formeln (XIV) oder (XV) entspricht, substituiert ist,

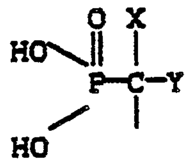

(XIV),

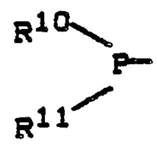

(XV),

wobei

X $R^9$ entspricht, einen Phosphorylrest, eine Hydroxygruppe oder eine Aminogruppe bedeutet und $R^9$ und X Glieder eines bis zu 12 Atome zählenden Ringes sein können,

Y der unter X angegebenen Bedeutung entspricht, wobei die Phosphorsäure der Formel X höchstens 2 Phosphorylgruppen und eine Amino- oder Hydroxygruppe enthalten darf,

$R^{10}$ und $R^{11}$ $C_{1-22}$-Alkyl, $C_{5-12}$-Cycloalkyl, $C_{7-14}$-Aralkyl oder - Arylalkyl, $C_{6-12}$-Aryl, eine Hydroxygruppe oder einen Alkoxy- oder Aryloxyrest bedeuten und $R^{10}$ und $R^{11}$ Glieder eines bis zu 12 Atome zählenden Ringes sein können und

$R^{12}$ und $R^{13}$ $C_{1-22}$-Alkyl, $C_{5-12}$-Cycloalkyl, $C_{7-14}$-Aralkyl- oder Aralkyl, $C_{6-14}$-Aryl, vorzugsweise Phenyl oder einen $C_{1-20}$-Acylrest, vorzugsweise einen Ace tyl- oder Benzoylrest, der wiederum durch einen $C_{1-22}$-Alkyl- oder $C_{6-14}$-Arylrest oder vorzugsweise durch eine Hydroxygruppe substituiert sein kann, der Phthalocyaninring der Formel III durch 1 - 12 Substituenten, vorzugsweise durch Alkoxygruppen oder Halogenatome substituiert sein kann.

Die Komponente B der erfindungsgemäßen Mischungen kann auch aus mehreren der erfindungsgemäßen Übergangsmetallkomplexe bestehen.

Beispiele für Zentralionen der erfindungsgemäßen Komplexe sind Übergangsmetalle in verschiedenen Oxidationsstufen der 1., 2., 3., 4., 5., 6., 7., 8. Nebengruppe und der 4. Periode des Periodensystems der Elemente nach Mendelejev (Hollemann, Wiberg, Lehrbuch der Anorganischen Chemie, Walter de Gruyter & Co, Berlin 1964), z.B. Fe(II), Fe(III), $FE^{\bullet}$, $Ni^{\bullet}$, Ni(II), Mn(II), Mn(III) usw.

Beispiele für Liganden der Formel (I) sind Acetylaceton, Benzoylaceton, Benzoylacetophenon usw.

Beispiele für Liganden der Formel (IV) sind Oxalsäure, Malonsäure, Bernsteinsäure, Maleinsäure, Fumarsäure usw.

Beispiele für Liganden der Formel (V) sind Essigsäure, Stearinsäure, Ölsäure, Acrylsäure usw.

Beispiele für Liganden der Formel (VI) sind das Cyclopentadienyl-, Benzoylcyclopentadienyl- oder das Acetylcyclopentadienylanion.

Beispiele für Liganden der Formel (VIII) sind Ethylendiamin, N,N′-Dimethylethylendiamin, o-Phenylendiamin, 1,3-Diaminopropan usw.

Beispiele für Liganden der Formel (X) sind N,N′-Ethenyliden-bis(amino-phenyl-methylphosphonsäure), Amino-phenyl-methylphosphonsäure, 1-Amino-1-phosphorylcyclohexan, N,N′-Ethyliden-bis(amino-methylphosphonsäure), Amino-methylphosphonsäure usw.

Beispiele für Liganden der Formel XI sind Triphenylphosphin, Triphenylphosphit, 1,2-Bis-(diphenylphosphino)ethan, Diphenylphosphinsäure usw.

Beispiele für Liganden der Formel XII sind Ethylendiamin-tetraessigsäure, o-Phenylendiamin-tetraessigsäure oder 1,2-Diamino-cyclohexan-tetraessigsäure.

Als Metallverbindung können erfindungsgemäß 0,1 bis 10 Gew.-% eines organo-Zinnazolids der Formel (XVI)

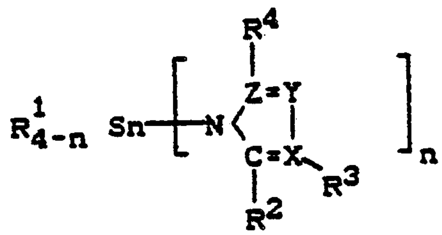

(XVI),

in welcher
$R^1$ für $C_{1-6}$-Alkyl, bevorzugt Butyl, $C_5$-$C_{12}$-Cycloalkyl, bevorzugt Cyclohexyl und für $C_6$-$C_{14}$-Aryl, welches zusätzlich durch Halogenatome und/oder Nitrogruppen substituiert sein kann, steht und die Reste $R^1$ gleich oder verschieden sein können,
Y für die CH-Gruppe oder für Stickstoff steht,
X und Z für Kohlenstoff- oder Stickstoffatome stehen,
$R^3$ und $R^4$ wenn X oder Z Stickstoff bedeuten, an den jeweiligen Stellen nicht vorhanden sind, andernfalls Wasserstoff oder $C_1$-$C_6$-Alkyl bedeuten,
$R^2$ und $R^3$ für Wasserstoff oder $C_1$-$C_6$-Alkyl stehen oder Glieder eines anellierten Benzolrings bilden können, der Halogen- (z.B. Cl, Br), Nitro-oder $C_1$-$C_6$-Alkyl-substituiert sein kann und
n für die Zahl 1, 2 oder 3 steht,
eingesetzt werden.

Beispiele für Reste $R^1$ in Formel XVI sind Methyl, Ethyl, Butyl, Hexyl, 2-Ethylhexyl, Cyclopentyl, Cyclohexyl, Phenyl, p-Chlorphenyl, p-Nitrophenyl, o-, m- oder p-Toluyl, 1-Naphthyl oder 2-Napthyl.

Beispiele für heterocyclische Reste in Formel XVI sind 1-Pyrrolyl, 1-Indolyl, 1-Imidazolyl, 4-Methylimidazolyl-1, 2-Methyl-imidazolyl-1, 4,5-Dimethyl-imidazolyl-1, 1-Pyrazolyl, 2-Propyl-imidazolyl-1, 1,2,4,-Triazolyl-1, Benzimidazolyl-1, 2-Methyl-benzimidazolyl-1, 2-Ethyl-benzimidazolyl-1 oder 1-Benzotriazolyl.

Die erfindungsgemäßen organo-Zinnazolide sind bekannt (z.B. DE-OS 2 056 652, GB-PS 1319889) und können aus den entsprechenden organo-Zinnhalogeniden und Stickstoffheterocyclen unter Einsatz eines Säurefängers hergestellt werden.

Die Einarbeitung der Additive in die Polyarylensulfide kann in Knetern oder (Schneckenwellen) Extrudern oder anderen dafür geeigneten Apparaturen erfolgen.

Die erfindungsgemäßen Mischungen können 0,01 - 400 Gew.-%, vorzugsweise 5 - 100 Gew.-%, bezogen auf die Summe der Komponenten A + B, übliche Zusatzstoffe enthalten, z.B. Fasern wie Glasfasern, Kohlenstoffasern, anorganische Füllstoffe, z.B. Zinkoxid, Titanoxid, Magnesiumcarbonat, Talkum, Calciumcarbonat, Calciumsulfat, Metallpulver wie Zink, Aluminium usw. und übliche Pigmente.

Die erfindungsgemäßen Mischungen weisen gegenüber unstabilisiertem Polyarylensulfid den Vorteil auf, bei Bestrahlung mit licht (langwelliges UV-Licht ab 305 nm) eine geringere Radikalbildungsgeschwindigkeit (gemessen durch ESR bei -110° C) aufzuweisen.

Ein weiterer Gegenstand der Erfindung ist die Verwendung der Mischungen zur Herstellung von Formkörper, vorzugsweise Fasern sowie die Faser aus den erfindungsgemäßen Mischungen.

## Beispiele

### Vergleichsbeispiel

Man stellt einen Schmelzkörper aus 10 g Poly-p-phenylensulfid mit einer Schmelzviskosität von 44 Pa (306° C, 1.000 $s^{-1}$) her. Man schabt mit einem Korundschaber PPS-Flocken von diesem Schmelzkörper ab und füllt sie in ein ESR-Röhrchen (Durchmesser 3 mm). Man bestrahlt unter Luft bei -110° C mit einer 500 W-Hg-Lampe, deren kurzwelliger Anteil (<305 nm) herausgefiltert wurde. Die niedrige Temperatur verhindert die Weiterreaktion der durch die Bestrahlung erzeugten Radikale.

Die Differenz der in 60 Minuten minus der in 30 Minuten gebildeten Radikale wird als Maß für die Radikalbildungsgeschwindigkeit gewählt. Differenz: 182 (Relativzahlen).

Die Zunahme des Yellowness-Index bei 35-stündiger Bewitterung beträgt 30.

Beispiel 1

Man stellte einen Schmelzkörper aus 10 g PPS und 0,5 g Nickelacetylacetonat her und verfuhr wie oben beschrieben.
Differenz: 0.
Die Zunahme des Yellowness-Index bei 35-stündiger Bewitterung beträgt 10, 1/3 der Zunahme der unstabilisierten Probe.

Beispiel 2

Man stellte einen Schmelzkörper aus 10 g PPS und 0,5 g Eisen-(III)-acetylacetonat her und verfuhr wie oben beschrieben.
Differenz: 0.

Beispiel 3

Man stellte einen Schmelzkörper aus 10 g PPS und 0,5 g Nickelphthalocyanin her und verfuhr wie oben beschrieben.
Differenz: 0.

Beispiel 4

Man stellte einen Schmelzkörper aus 10 g PPS und 0,5 g Nickeldiacetyldioxim her und verfuhr wie oben beschrieben.
Differenz: 0.

Beispiel 5

Man stellte einen Schmelzkörper aus 10 g PPS und 0,5 g Mangan(II)acetylacetonat her und verfuhr wie oben beschrieben.
Differenz: 0.

Beispiel 6

Man stellte einen Schmelzkörper aus 10 g PPS und 0,5 g Benzoylferrocen her und verfuhr wie oben beschrieben.
Differenz: 0.

Beispiel 7

Man stellte einen Schmelzkörper aus 10 g PPS und 0,5 g eines Komplexes aus 2 Äquivalenten N,N′-Ethenyliden-bis-amino-phenyl-methylphosphonsäure und einem Äquivalent Ni(II) her und verfuhr wie oben beschrieben.
Differenz: 10.

Vergleichsbeispiel

Man stellte einen Schmelzkörper aus 10 g PPS und 0,5 g Kupfer(I)chlorid her und verfuhr wie oben beschrieben.
Differenz: 45.

Beispiele

Beispiel 8 (Vergleichbeispiel)

Ein nach EP-OS 171 021 hergestelltes Polyphenylensulfid wird nach bekannten Methoden mit 30 Gew.-% einer handelsüblichen Kurzglasfaser sowie 30 Gew.-% Talkum compoundiert. Man erhält ein Produkt mit einem spezifischen Gewicht von 1,9 g/cm$^3$. Die Biegefestigkeit beträgt 150 N/mm$^2$, die Randfaserdehnung 1,0 %, der E-Modul 17 000 N/mm$^2$, die Schlagzähigkeit 10 kJ/m$^2$. Das Produkt weist eine Wärmeleitfähigkeit von 0,4 W/K•m bei 25 °C auf. Das Produkt weist einen elektrischen Oberflächenwiderstand von $10^{-15}$ Ohm sowie einen spezifischen Durchgangswiderstand von $10^{-15}$ Ohm • cm auf.

Beispiel 9

Es wird ein nach Beispiel 8 beschriebenes Grundharz mit 70 Gew.-% eines handelsüblichen Zinkstaubes compoundiert. Man erhält ein Produkt mit einem spezifischen Gewicht von 2,89 g/cm$^3$. Die Biegefestigkeit beträgt 100 N/mm$^2$, die Randfaserdehnung 1,9 %, der E-Modul 6700 N/mm$^2$, die Schlagzähigkeit 13 kJ/m$^2$. Das Produkt weist eine Wärmeleitfähigkeit von 0,8 W/K•m bei 25 °C auf.

Beispiel 10

Es wird ein nach Beispiel 8 beschriebenes Grundharz mit 77 Gew.-% eines handelsüblichen Zinkstaubes compoun diert. Man erhält ein Produkt mit einem spezifischen Gewicht von 3,29 g/cm$^3$. Die Biegefestigkeit beträgt 92 N/mm$^2$, die Randfaserdehnung 1,6 %, der E-Modul 7700 N/mm$^2$, die Schlagzähigkeit 15 kJ/m$^2$. Das Produkt weist einen elektrischen Oberflächenwiderstand von $10^{-6}$ Ohm und einen spezifischen Durchgangswiderstand von $10^{-3}$ Ohm•cm auf.

Beispiel 11 (Vergleichsbeispiel)

Ein Polyphenylensulfid gemäß EP-OS 121 021 mit einer Ausgangsviskosität von 35 PaS wird mit 45 % einer handelsüblichen Glasfaser compoundiert. Daraus auf einer konventionellen Spritzgußmaschine hergestellte Farbmusterplättchen zeigen nach vierwöchiger Belichtung mit Sonnenlicht eine deutliche Braunfärbung. Dies ist im Xenon 450 Test nach 120 Stunden ebenfalls deutlich zu erkennen.

Beispiel 12

Es wird ein nach Beispiel 11 beschriebenes Grundharz mit 70 % eines handelsüblichen Zinkstaubes compoundiert. Nach vier Wochen Belichtung in Sonnenlicht bzw. nach 120 Stunden im Xenon 450 Test zeigt dieses Produkt nur geringe Farbabweichungen.

Beispiel 13

Ein nach Beispiel 11 beschriebenes Grundharz wird mit 40 % eines $TiO_2$, beispielsweise eines Bayer Titan FKD, compoundiert. Nach vier Wochen Belichtung in Sonnenlicht bzw. nach 120 Stunden im Xenon 450 Test zeigen sich nur geringe Farbabweichungen.

Beispiel 14

Ein nach Beispiel 11 beschriebenes Grundharz wird mit 20 % eines in Beispiel 3 beschriebenen $TiO_2$ sowie 20 % eines handelsüblichen ZnO compoundiert. Nach vier Wochen Belichtung in Sonnenlicht bzw. nach 120 Stunden im Xenon 450 Test zeigen sich nur geringe Farbabweichungen.

Beispiel 15

Ein nach Beispiel 11 beschriebenes Grundharz wird mit 20 % eines in Beispiel 3 beschriebenen $TiO_2$ sowie 20 % eines handelsüblichen Zinkacetylacetonat compoundiert. Nach vier Wochen Belichtung in Sonnenlicht bzw. nach 120 Stunden im Xenon 450 Test zeigen sich nur geringe Farbabweichungen.

Beispiel 16

Ein nach Beispiel 11 beschriebenes Grundharz wird mit 30 % einer handelsüblichen Glasfaser (11 µm) sowie 29,5 % eines $TiO_2$, beispielsweise Bayer Titan R-FK3 unter Zusatz von 0,5 % Microtalkum compoundiert. Nach vier Wochen Belichtung in Sonnenlicht bzw. nach 120 Stunden im Xenon 450 Test zeigten sich nur geringe Farbabweichungen.

Beispiel 17 (Vergleichsbeispiel)

Man stellt einen Schmelzkörper aus 10 g Poly-p-phenylensulfid mit einer Schmelzviskosität von 44 Pa (306° C, 1000 $s^{-1}$) her, Man schabt mit einem Korundschaber PPS-Flocken von diesem Schmelzkörper ab und füllt sie in ein ESR-Röhrchen (Durchmesser 3 mm). Man bestrahlt unter Luft bei - 110° C mit einer 500 W-Hg-Lampe, deren kurzwelliger Anteil (>305 nm) herausgefiltert wurde. Die niedrige Temperatur verhindert die Weiterreaktion der durch die Bestrahlung erzeugten Radikale.

Die Differenz der in 60 Minuten minus der in 30 Minuten gebildeten Radikale wird als Maß für die Radikalbildungsgeschwindigkeit gewählt. Differenz: 182 (Relativzahlen).

Beispiel 18

Man stellte einen Schmelzkörper aus 10 g PPS und 0,2 g Tricyclohexylstannyl-imidazol her und verfuhr wie in Beispiel 17 beschrieben. Differenz: 92.

Beispiel 19

Man stellte einen Schmelzkörper aus 10 g PPS und 0,5 g Tricyclohexylstannyl-imidazol her und verfuhr wie in Beispiel 17 beschrieben. Differenz: 92.

Beispiel 20(Herstellung einer Faser)

Ein Polyphenylensulfid mit einer Schmelzviskosität von 160 Pa's (306° C/$10^3$ $sec^{-1}$) wurde in einer Extruderspinnapparatur aufgeschmolzen und mehrfädig versponnen.

Spinnbedingungen:

Schmelztemperatur:

332° C (Extruderbereich)
317° C (Spinnpumpenbereich)

Druckaufbau:

33 bar (Extruderbereich)
75 bar (Spinnpumpenbereich)

Düse:

30/0,2 mm x 0,4 mm (Lochzahl/Durchmesser x Kanallänge)

Siebfilter:

28 µm Maschenweite

Abzug:

250 m/min

Spinnverzug:

18,5

Das so erhaltene Spinngut wurde einem 2-stufigen Nachbehandlungsprozeß unterworfen.

Stufe 1: Vorstreckung

Strecktemperatur 85 °C (Kontakthitze)
Streckgrand 1:3,8

Stufe 2: Nachverstreckung und Fixierung

Stecktemperatur 115 °C (Kontakthitze)
Streckgrand: 1:1,2
Gesamtstreckgrad: 1:4,56
Fixiertemperatur: 190 °C (Heizgalette)

In analoger Weise wurden zwei weitere PPS-Granulatproben mit einer Schmelzviskosität von 160 Pa's, die (A) 2,0 Gew.-% Niacetylacetonat und (B) 2,0 Gew.-% Cuphthalocyanin enthielten, versponnen und nachbehandelt.

Es resultieren Filamentgarne mit den in der Übersicht genannten mechanischen und thermischen Eigenschaften.

| | Festigkeit [cN/dtex] | Dehnung [%] | E-Modul [cN/dtex] | $TMA_{Bruch}$ [°C] | Kochschrumpf [%] |
|---|---|---|---|---|---|
| Vergleich | 4,29 | 19,5 | 37,5 | 276 | 1,2 |
| (A) | 4,03 | 19,4 | 34,4 | 280 | 0,5 |
| (B) | 4,16 | 19,9 | 48,2 | 278 | 0,1 |

Das Degradationsverhalten der genannten Materialien wurde unter folgenden Bedingungen überprüft.

a) Xenontest: 42 °C, 50 % rel. Luftfeuchte, Luftatmosphäre, Bestrahlung mit Licht der Wellenlänge >305 nm, Behandlungsdauer: 48 Std. 144 Std.

b) Tempertest: 240 °C/Luftatmosphäre Behandlungsdauer: 216 Std.

Die folgende Übersicht nennt die Restfestigkeitswerte der Filamentgarnproben (%, bezogen auf Ausgangsniveau).

| | Xenotest | | Tempertest |
|---|---|---|---|
| | 48 Std. | 144 Std. | 216 Std. |
| Vergleich | 78 % | 45 % | 77 % |
| (A) | 90 % | 62 % | 92 % |
| (B) | 83 % | 53 % | 68-71 % |

**Ansprüche**

1. Mischungen aus

A) Polyarylensulfiden, vorzugsweise Polyphenylensulfid und

B) 0,1 bis 90, vorzugsweise 50 - 75 Gew.-% von Metallen und/oder Metallverbindungen und Übergangsmetallkomplexen und weiteren Substanzen, wobei $TiO_2$, ZnO, Cu(I)Cl ohne weitere Zusätze ausgenommen sind und gegebenenfalls

C) bezogen auf das Gewicht der Summe der Mischung aus A) + B) bis 400 Gew.-% anderer Füllstoffe und Zusatzstoffe.

2. Verwendung von Mischungen nach Anspruch 1 zur Herstellung geformter Körper.

3. Faser, hergestellt aus Mischungen des Anspruchs 1.

Europäisches Patentamt

# EUROPÄISCHER RECHERCHENBERICHT

Nummer der Anmeldung

EP 89 10 1080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN Band 9, Nr. 241 (C-306)(1964) 27. September 1985; & JP - A - 60 99164 (TOYO SODA K.K.) 03.06.1985 | 1,2 | C 08 L 81/02<br>C 08 K 3/08<br>C 08 K 3/22<br>C 08 K 3/30<br>C 08 K 5/07 |
| A | US-A-3 451 873 (I. HARRISON et al.) * Beispiel I * | 1 | |
| X | PATENT ABSTRACTS OF JAPAN Band 9, Nr. 309 (C-318)(2032) 5. Dezember 1985; & JP - A - 60 147 471 (TOYO SODA K.K.) 03.08.1985 | 1 | |
| D,X | DE-A-3 617 138 (TORAY) * Ansprüche 1-6; Beispiele * | 1-3 | |
| A | PATENT ABSTRACTS OF JAPAN Band 11, Nr. 53 (C-404)(2500), 19. Februar 1987; & JP - A - 61 213 262 (ASAHI GLASS) 22.09.1986 | 1 | **RECHERCHIERTE SACHGEBIETE (Int. Cl.4)** |
| D,X | US-A-3 354 129 (J. EDMONDS et al.) * Beispiel XXV; Anspruch 14 * | 1-3 | C 08 L 81/00<br>C 08 K 3/00<br>C 08 K 5/00 |
| X | EP-A-0 094 093 (PHILLIPS PETROLEUM) * Ansprüche 1-4,11 * | 1-3 | |

Der vorliegende Recherchenbericht wurde für alle Patentansprüche erstellt

| Recherchenort | Abschlußdatum der Recherche | Prüfer |
|---|---|---|
| BERLIN | 25-04-1989 | BOEKER R.B. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)